# EUROPEAN PATENT APPLICATION

(11) **EP 2 416 028 A1**
(43) Date of publication of application: **08.02.2012**
(21) Application number: 10758394.0
(22) Date of filing: 12.03.2010
(51) Int. Cl.: F16D 27/115

(54) **ELECTROMAGNETIC CLUTCH**

(30) Priority: 03.04.2009 JP 2009090989
(71) Applicant: JTEKT Corporation, Osaka-shi, Osaka 542-8502 (JP)
(72) Inventor: FUJII, Noriyuki, Osaka-shi Osaka 542-8502 (JP); NISHIJI, Makoto, Osaka-shi Osaka 542-8502 (JP)
(74) Representative: TBK
(86) International application number: PCT/JP2010/054238
(87) International publication number: WO 2010/113618

(57) **Abstract**

An electromagnetic clutch is provided which produces sufficiently large clutch force by increasing the clutch capacity without increasing the number of inner and outer clutch plates. The electromagnetic clutch includes an intermediate member (8) that is connected to inner clutch plates (7a) so as not to be rotatable relative thereto and moves toward a clutch mechanism (7) under rotational force of a rotational member (5). The intermediate member (8) has: a pressing portion (23a) for pressing an armature (21) in the direction to frictionally couple the inner and outer clutch plates (7a, 7b) as the intermediate member (8) moves toward the clutch mechanism (7); and a movement force conversion section (24) for converting rotational force of a rotational member (6) into movement force toward the clutch mechanism (7). The movement force conversion section (24) is arranged between the intermediate member (8) and the rotational member (5).

## Description

### TECHNICAL FIELD

The invention relates to an electromagnetic clutch, and particularly to an electromagnetic clutch with a clutch mechanism having frictional clutch plates.

### BACKGROUND ART

Conventionally, electromagnetic clutches have been used which have an output mechanism that outputs movement force by generating electromagnetic force and a clutch mechanism that connects two rotational members, provided at the inner and outer sides, respectively, and rotatable about the axis of the output mechanism, to each other in a disconnectable manner (for example, refer to Patent Document 1).

The output mechanism has an electromagnetic coil that generates electromagnetic force and an armature that moves as the electromagnetic coil is energized, and is arranged between the two rotational members provided at the inner and outer sides, respectively.

The clutch mechanism has inner and outer clutch plates that are each formed from an annular plate and that are frictionally coupled to each other by the output of the output mechanism. The clutch mechanism is arranged between the electromagnetic coil and the armature.

With the structure described above, as the electromagnetic coil is energized, the armature moves toward the output mechanism under the electromagnetic force generated at the electromagnetic coil. As the armature thus moves, the outer and inner clutch plates relatively approach each other and then are frictionally coupled to each other, resulting in the two rotational members, provided at the inner and outer sides respectively, being connected to each other so that torque is transmittable therebetween.

### RELATED ART DOCUMENT

### PATENT DOCUMENT

Patent Document 1: Japanese Patent Application Publication No. 2008-45619

### OUTLINE OF THE INVENTION

### PROBLEM TO BE SOLVED BY THE INVENTION

With the electromagnetic clutch of Patent Document 1, however, the number of inner and outer clutch plates needs to be increased to obtain larger clutch force. This, however, leads to an increase in the axial length of the entire clutch. As a result, the number of inner and outer clutch plates is limited, that is, the clutch capacity is limited, and therefore sufficiently large clutch force can not be obtained.

Thus, it is one of the objects of the invention to provide an electromagnetic clutch that achieves a larger clutch capacity and thus produces sufficiently large clutch force without the need of increasing the number of inner and outer clutch plates.

### MEANS FOR SOLVING THE INVENTION

An electromagnetic clutch according to an aspect of the invention includes: a drive mechanism having an electromagnetic coil that generates electromagnetic force and an armature that moves as the electromagnetic coil is energized; and a clutch mechanism that has a first clutch plate and a second clutch plate that are frictionally coupled to each other as the armature is moved by driving of the drive mechanism, and that connects two rotational members, provided at an inner side and an outer side, respectively, and rotatable about an axis of the first and second clutch plates, to each other in a disconnectable manner, wherein: the first clutch plate is connected to one of the rotational members via an intermediate member such that rotation is transmittable between the first clutch plate and the one of the rotational members via the intermediate member; the second clutch plate is connected to the other of the rotational members such that rotation is transmittable between the second clutch plate and the other of the rotational members, and a movement force conversion section is provided at a connection portion at which the intermediate member and the one of the rotational members are connected to each other, the movement force conversion section converting part of rotational force transmitted through the connection portion into movement force for moving the intermediate member toward the clutch mechanism; and the intermediate member has a pressing portion that presses the armature in a direction to strengthen the frictional coupling between the first clutch plate and the second clutch plate as the intermediate member moves toward the clutch mechanism under the movement force obtained through the conversion by the movement force conversion section.

### EFFECTS OF THE INVENTION

According to the invention, the clutch capacity can be increased and thus sufficiently large clutch force can be obtained without the need of increasing the number of inner and outer clutch plates.

### BRIEF DESCRIPTION OF THE DRAWINGS

[FIG. 1] FIG. 1 is a sectional view illustrating the entirety of an electromagnetic clutch of the first example embodiment of the invention.
[FIG. 2] FIG. 2 is an exploded perspective view illustrating a movement force conversion section of the electromagnetic clutch of the first example embodiment of the invention.
[FIG. 3] FIG. 3 is an exploded perspective view illustrating a first modification example of the movement force conversion section of the electromagnetic clutch of the first example embodiment of the invention.
[FIG. 4] FIG. 4 is a sectional view illustrating a second modification example of the movement force conversion section of the electromagnetic clutch of the first example embodiment of the invention.
[FIG. 5A] FIG. 5A is a sectional view illustrating how the movement force conversion section operates when an electromagnetic coil shown in FIG. 4 is energized with a small current.
[FIG. 5B] FIG. 5B is a sectional view illustrating how the movement force conversion section operates when the electromagnetic coil shown in FIG. 4 is energized with a large current.
[FIG. 6] FIG. 6 is a sectional view illustrating the entirety of an electromagnetic clutch of the second example embodiment of the invention.
[FIG. 7A] FIG. 7A is a sectional view illustrating a state where a cam follower of a movement force conversion section of the electromagnetic clutch of the second example embodiment of the invention rides on one side cam faces.
[FIG. 7B] FIG. 7B is a sectional view illustrating a state where the cam follower of the movement force conversion section of the electromagnetic clutch of the second example embodiment of the invention rides on the other side cam faces.

### MODES FOR CARRYING OUT THE INVENTION

### (First Example Embodiment)

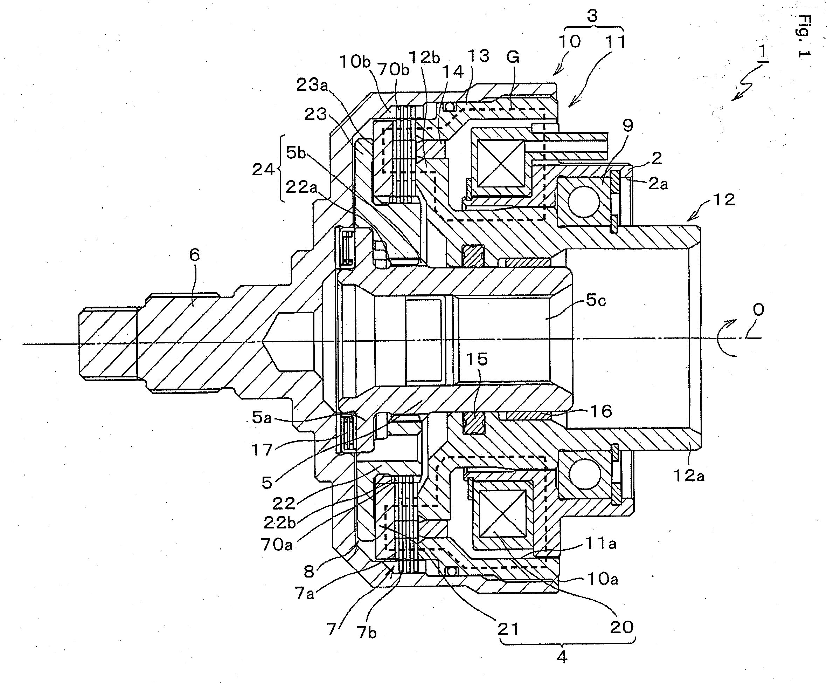

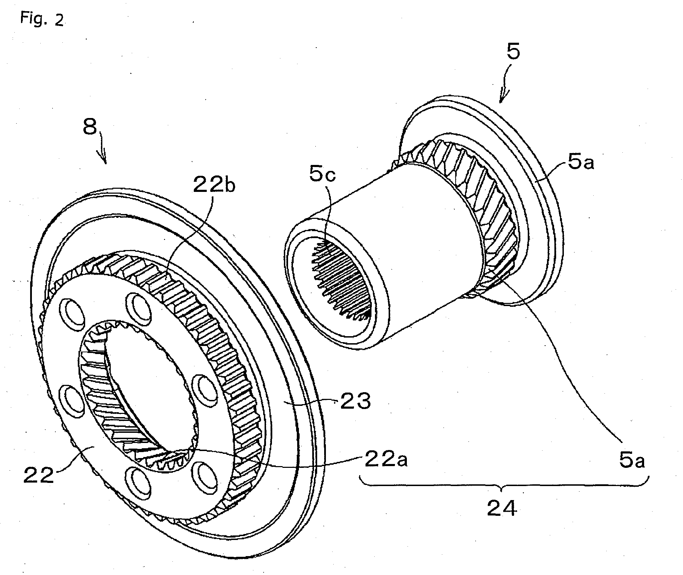

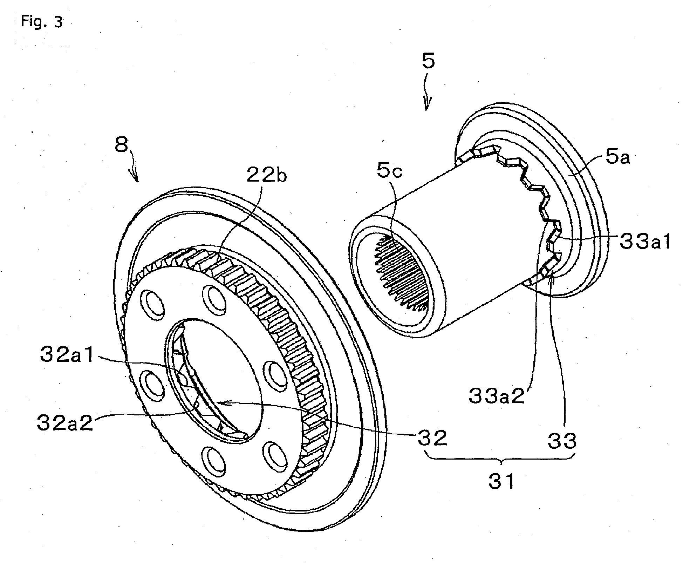

An electromagnetic clutch of the first example embodiment of the invention is applied to, for example, a drive force transmission device for a vehicle. Its structure will be described using FIGs. 1 to 3. FIG. 1 shows a view cutting through the electromagnetic clutch in parallel to the axis of rotational members. FIG. 2 shows an example of a movement force conversion section of the electromagnetic clutch. FIG. 3 shows a modification example of the movement force conversion section of the electromagnetic clutch.

### (Overall Structure of Electromagnetic Clutch)

In FIG. 1, the electromagnetic clutch denoted by the reference number "1" is constructed, mainly, of a base 2 used for attachment, a housing 3 rotatable relative to the base 2, a drive mechanism 4 that produces clutch drive force in the housing 3, a clutch mechanism 7 for connecting two rotational members 5 and 6, provided at the inner and outer sides, respectively, and rotatable about the axis of the drive mechanism 4, to each other in a disconnectable manner, and an intermediate member 8 moveable toward the clutch mechanism 7.

### (Structure of Base 2)

The base 2 is formed, in its entirety, from a stepped cylindrical part. A housing space 2a housing a bearing 9, etc. is provided in the base 2.

### (Structure of Housing 3)

The housing 3 is constructed of a front housing 10 and a rear housing 11, and is arranged on an axis O of the base 2 and is rotatably supported by an inner peripheral face of the base 2 via the bearing 9.

The front housing 10 has a housing space 10a opening toward the rear housing side and a straight spline meshing portion 10b exposed to the housing space 10a, and is formed, in its entirety, from a bottom-closed cylindrical part. Integrally provided at an outer end face of the front housing 10 (the end face on the side opposite to the opening-side end face) is the outer rotational member ("the other of the rotational members") 6 that protrudes along the axis O of the base 2 toward the side opposite to the rear housing side.

The rotational member 6 is arranged on the axis O of the base 2 and is connected to an input shaft (not shown in the drawings). The rotational member 6 is structured to rotate together with the front housing 10.

The rear housing 11 is constructed of first to third housing elements 12 to 14 and screwed to the inner peripheral face of the opening of the front housing 10. An annular housing space 11 a opening toward the side opposite to the direction the rotational member 6 protrudes is provided in the rear housing 11.

The first housing element 12 has a cylindrical portion 12a inserted into the base 2 and a flange portion 12b opposed, via the intermediate member 8, etc., to the bottom face of the front housing 10, and is arranged on the radially inner side of the rear housing 11. The first housing element 12 is formed, in its entirety, from a cylindrical part made of a magnetic material, such as soft iron. The inner rotational member ("one of the rotational members") 5 is arranged on the inner peripheral face of the first housing element 12 via a seal member 15 and a bearing 16.

The rotational member 5 has a flange portion 5a provided on the outer peripheral face of the rotational member 5. The rotational member 5 is arranged on the axis O of the base 2 and is rotatably supported by the bottom face of the front housing 10 via a bearing 17. A helical spline meshing portion ("second helical spline") 5b constituting a helical gear interposed between the flange portion 5a and the rear housing 11 is provided at the outer peripheral face of the rotational member 5. A straight spline meshing portion 5c that meshes, via splines, with an output shaft (not shown in the drawings) is provided at the inner peripheral face of the rotational member 5.

The second housing element 13 is arranged on the radially outer side of the rear housing 11 and is formed, in its entirety, from a cylindrical part made of a magnetic material, such as soft iron, as is the first housing element 12.

The third housing element 14 is interposed between the first housing element 12 and the second housing element 13 and is formed, in its entirety, from an annular part for housing element connection, which is made of a non-magnetic material, such as stainless steel.

### (Structure of Drive Mechanism 4)

The drive mechanism 4 has an electromagnetic coil 20 and an armature 21 and is arranged on the axis O of the base 2. The drive mechanism 4 is structured such that when the rotational members 5 and 6 rotate differentially, each clutch plate among inner clutch plates 7a of the clutch mechanism 7 (will be described later) and a clutch plate among outer clutch plates 7b of the clutch mechanism 7 (will be described later), which is adjacent to the same inner clutch plate, are pressed against each other such that they frictionally slide on each other.

The electromagnetic coil 20 is housed in the housing space 11 a of the rear housing 11 and is attached on the outer peripheral face of the base 2. As indicated using broken lines in FIG. 1, the electromagnetic coil 20 is structured such that when it is energized, a magnetic circuit G develops over the base 2, the armature 21, the rear housing 11, and so on, generating electromagnetic force that supplies the armature 21 with movement force for moving the armature 21 toward the rear housing 11 side.

The armature 21 is arranged between the clutch mechanism 7 and the intermediate member 8 and is housed in the front housing 10. The armature 21 is formed, in its entirety, from an annular plate made of a magnetic material, such as iron. The armature 21 is structured to receive the electromagnetic force from the electromagnetic coil 20 and move along the axis O of the base 2 toward the clutch mechanism 7 side. A spline meshing portion is formed at an inner peripheral portion of the armature 21 along the direction of the axis O, and it is connected to a straight spline meshing portion 22b of the intermediate member 8 (will be described later) such that the armature 21 is not rotatable relative to the straight spline meshing portion 22b of the intermediate member 8 but is moveable axially.

### (Structure of Clutch Mechanism 7)

The clutch mechanism 7 has the inner clutch plates 7a each serving as "first clutch plate" and the outer clutch plates 7b each serving as "second clutch plate", which can be frictionally coupled to each other as the armature 21 is moved by driving of the drive mechanism 4, and the clutch mechanism 7 is arranged between the armature 21 and the rear housing 11 and is housed in the front housing 10. The clutch mechanism 7 is structured to connect the rotational members 5 and 6 to each other by causing each of the inner clutch plates 7a and the outer clutch plate 7b adjacent to the said inner clutch plate 7a to frictionally couple to each other, and to disconnect the rotational members 5 and 6 from each other by cancelling the frictional coupling between them.

The inner clutch plates 7a and the outer clutch plates 7b are alternately arranged along the axis O of the base 2, and are each formed, in its entirety, from an annular friction plate.

The inner clutch plates 7a have respective straight spline meshing portions 70a at their inner peripheral portions, and are moveably arranged on the axis O of the base 2. The straight spline meshing portions 70a are connected to the straight spline portion 22b of the intermediate member 8 (will be described later) such that they are not rotatable relative to the straight spline meshing portion 22b but are moveable axially.

The inner clutch plates 7b have respective straight spline meshing portions 70b at their outer peripheral portions, and are moveably arranged on the axis O of the base 2. The straight spline meshing portions 70b are connected to the straight spline portion 10b of the front housing 10 such that they are not rotatable relative to the straight spline meshing portion 10b.

### (Structure of Intermediate Member 8)

As shown in FIG. 2, the intermediate member 8 has a base portion 22 and a flange portion 23. The intermediate member 8 is arranged at the outer periphery of the rotational member 5 and is housed in the front housing 10 (shown in FIG. 1). The intermediate member 8 is made, in its entirety, of a non-magnetic material, such as stainless steel. The intermediate member 8 is structured to receive the rotational force transmitted from the rotational member 5 and thereby move toward the clutch mechanism 7.

The base portion 22 is formed from a cylindrical part opening in its axial direction. A helical spline meshing portion ("first helical spline") 22a that corresponds to and meshes with (engages with) the helical spline meshing portion 5b of the rotational member 5 is provided at the inner peripheral face of the base portion 22, and a straight spline meshing portion 22b that corresponds to the straight spline meshing portions 70a of the respective inner clutch plates 7a is provided at the outer peripheral face of the base portion 22.

The helical spline meshing portion 22a is structured to constitute, together with the helical spline meshing portion 5b, a movement force conversion section 24, and convert part of the rotational force transmitted between the intermediate member 8 and the rotational member 5 into movement force toward the clutch mechanism 7. The helix angles of the helical spline meshing portions 22a and 5b are each set to such an angle that dissipation of strengthening of the frictional coupling between the inner clutch plates 7a and the outer clutch plates 7b does not occur in a state where the electromagnetic coil 20 is not energized (e.g., 45 degrees). The helix angles of the helical spline meshing portion 22a and 5b are changed as needed in accordance with the number of clutch plates, the dimension from the axis O to the spline meshing point, and so on.

The flange portion 23 is interposed between the bottom face of the front housing 10 and an end face, at one side, of the armature 21 (i.e., the end face at the side opposite to the clutch mechanism side end face) (shown in FIG. 1). The flange portion 23 is arranged at an axial end portion, at one side, of the intermediate member 8 and is integrally provided on the outer peripheral face of the base portion 22. A pressing portion 23a that presses, through the movement of the intermediate member 8 toward the clutch mechanism 7, the armature 21 in a direction to strengthen the frictional coupling between the inner clutch plates 7a and the outer clutch plates 7b is provided at the clutch mechanism side end face of the flange portion 23.

### (Operation of Electromagnetic Clutch 1)

As shown in FIG. 1, when the electromagnetic coil 20 of the drive mechanism 4 is energized, the magnetic circuit G develops over the base 2, the armature 21, the rear housing 11, etc., and its electromagnetic force forces the armature 21 to move toward the clutch mechanism 7 (the rear housing 11) side. As the armature 21 thus moves, the inner clutch plates 7a and the outer clutch plates 7b of the clutch mechanism 7 are pressed toward the rear housing 11 side, whereby the inner clutch plates 7a and the outer clutch plates 7b relatively approach each other and then frictionally couple to each other.

In this state, as a result of the frictional coupling between the inner clutch plates 7a and the outer clutch plates 7b, primary clutch force occurs between them, causing the rotational members 5 and 6 to be connected to each other via the inner clutch plates 7a and the outer clutch plates 7b such that torque is transmittable between the rotational members 5 and 6.

At this time, if the rotational member 6 rotates in the direction indicated by the arrow in FIG. 1 (the clockwise direction as viewed from the side where the opening of the front housing 10 is present) under the drive torque of a drive source (not shown in the drawings), the rotational member 5 rotates together with the rotational member 6. That is, the rotational force of the rotational member 6 is transmitted to the rotational member 5 via the clutch mechanism 7 and the intermediate member 8, and the rotational member 5 receives primary generation torque from the intermediate member 8 and thereby rotates in the direction in which the rotational member 6 is rotating. At this time, at the movement force conversion section 24 (the helical spline meshing portions 22b and 5b) of the intermediate member 8, thrust force of a level proportional to the level of the primary generation torque acts on the rotational member 5 toward the front housing 10 side, and thrust force of a level proportional to the level of the primary generation torque acts on the intermediate member 8 toward the armature 21 side.

That is, part of the rotational force transmitted from the intermediate member 8 to the rotational member 5 is converted, at the movement force conversion section 24, into movement force toward the clutch mechanism 7, and this movement force forces the intermediate member 8 to move toward the clutch mechanism 7 side, whereby the pressing portion 23a presses the armature 21 in the direction to strengthen the frictional coupling between the inner clutch plates 7a and the outer clutch plates 7b, so that secondary clutch force occurs, due to the armature 21 being thus pressed, between the inner clutch plates 7a and the outer clutch plates 7b. As such, the rotational force of the rotational member 6 is transmitted to the rotational member 5 via the clutch mechanism 7 and the intermediate member 8, and the rotational member 5 receives secondary generation torque from the intermediate member 8. Receiving the torque amplified through repetition of such a cycle, the rotational member 5 continues to rotate in the direction indicated by the arrow in FIG. 1.

If the helix angle of the helical spline meshing portion 22a (the angle at which the direction in which the helical spline teeth extend is inclined with respect to the direction of the axis O) is made larger, there may be a case where even if the energization of the electromagnetic coil 20 is interrupted, the strengthening of the frictional coupling between the inner clutch plates 7a and the outer clutch plates 7b dissipates due to the secondary generation torque and thus the frictional coupling becomes unable to be cancelled (is locked). According to the example embodiment, however, since the helix angle is set to such an angle that dissipation of the frictional coupling between the respective clutch plates does not occur when the electromagnetic coil 20 is not energized, the frictional coupling between the respective clutch plates is reliably cancelled by interrupting the energization of the electromagnetic coil 20. As such, in the electromagnetic clutch 1, the intermediate member 8 amplifies the pressing force on the clutch plates, but locking of the clutch mechanism 7 does not occur. Note that the helix angle should be set, as needed, to an appropriate value empirically, or through simulations, in accordance with the number of clutch plates, the clutch plate friction coefficient(s), and so on.

### (Effects of First Example Embodiment)

The first example embodiment described above provides the following effects.

The clutch capacity can be increased and sufficiently large clutch force can be obtained without the need of increasing the number of the inner clutch plates 7a and outer clutch plates 7b.

While the movement force conversion section 24 is constructed of the helical spline meshing portion 22a of the intermediate member 8 and the helical spline meshing portion 5b of the rotational member 5 in the example embodiment, the invention is not limited to this. A movement force conversion section 31 shown in FIG. 3 may be employed. In this case, the rotation force transmitted between the intermediate member 8 and the rotational member 5 (shown in FIG. 1) is partly converted, at the movement force conversion section 24, into movement force toward the clutch mechanism 7 regardless of whether the rotational member 6 (shown in FIG. 1) is rotating in the normal direction or reverse direction.

As shown in FIG. 3, the movement force conversion section 31 is constructed of a first cam 32 formed at the intermediate member 8 and having a plurality of first cam faces 32a1 and a plurality of second cam faces 32a2, and a second cam 33 formed at the rotational member 5 and having a plurality of first cam faces 33a1 and a plurality of second cam faces 33a2. The first cam 32 and the second cam 33 are each composed of a plurality of thick portions that are trapezoidal as viewed along the axis O, and the first cam faces 32a1 and 33a1 and the second cam faces 32a2 and 33a2 form the respective slants of the trapezoids. Each first cam face 32a1 is inclined in one direction of the circumferential direction with respect to the direction of the axis O, while each second cam face 32a2 is inclined in the direction opposite to it, with respect to the direction of the axis O. The first cam faces 32a1 of the first cam 32 are opposed to the first cam faces 33a1 of the second cam 33, which is formed at the flange portion 5a side of the cylindrical portion of the rotational member 5. The first cam faces 32a1 of the first cam 32 contact the first cam faces 33a1 of the second cam 33 when the rotational member 6 rotates relative to the rotational member 5 in the direction indicated by the arrow in FIG. 1, while the second cam faces 32a2 of the first cam 32 contact the second cam faces 33a2 of the second cam 33 when the rotational member 6 rotates relative to the rotational member 5 in the direction opposite to the direction indicated by the arrow in FIG. 1.

With regard to the cams 32 and 33, the first cam faces 32a1 and 33a1 and the second cam faces 32a2 and 33a2 are each inclined at such an angle(s) that dissipation of the strengthening of the frictional coupling between the inner clutch plates 7a and the outer clutch plates 7b does not occur in a state where the electromagnetic coil 20 (shown in FIG. 1) is not energized. With the movement force conversion section 31 shown in FIG. 3, therefore, the frictional coupling between the respective clutch plates is reliably cancelled by interrupting the energization of the electromagnetic coil 20, as in the case of the helical splines shown in FIG. 2.

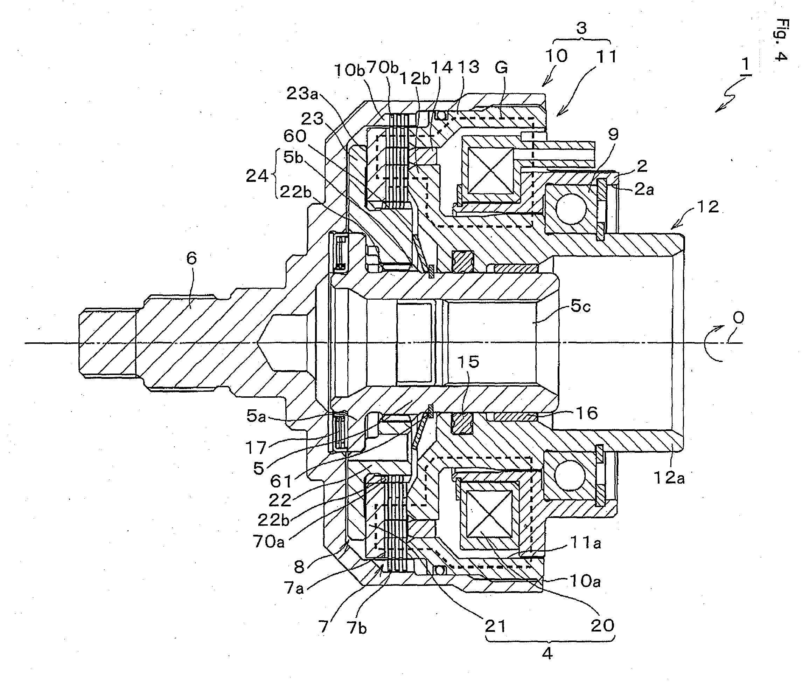

While the example embodiment employs the structure in which the intermediate member 8 receives thrust force as the rotational member 5 rotates during clutch torque transmission, the invention is not limited to this. As shown in FIG. 4, a structure may be employed in which the intermediate member 8 receives thrust force as the rotational member 5 rotates during clutch torque transmission and the intermediate member 8 constantly receives, from e.g., a diaphragm spring 60, thrust force (preload) in a direction away from the armature 21. In this case, a snap ring 61 is attached on the outer peripheral face of the rotational member 5, and the diaphragm spring 60, serving as preload means, is disposed in a compressed state between the snap ring 61 and the intermediate member 8.

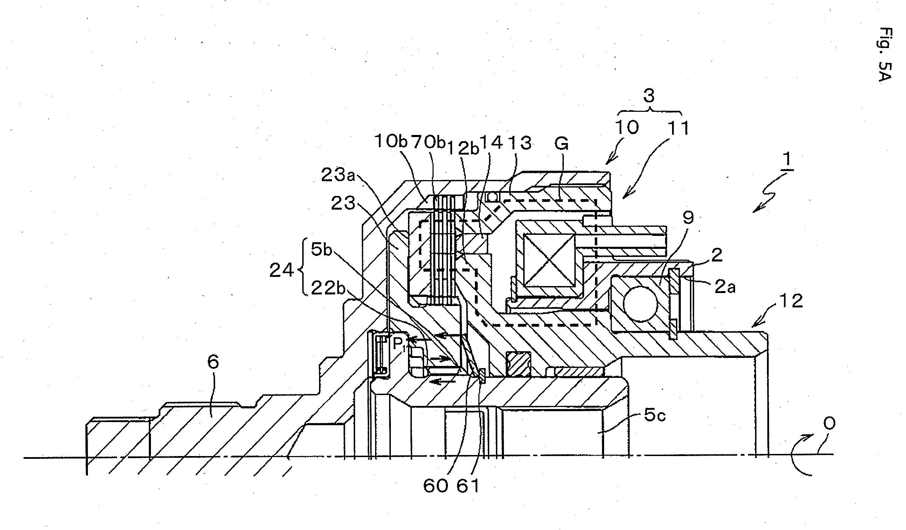

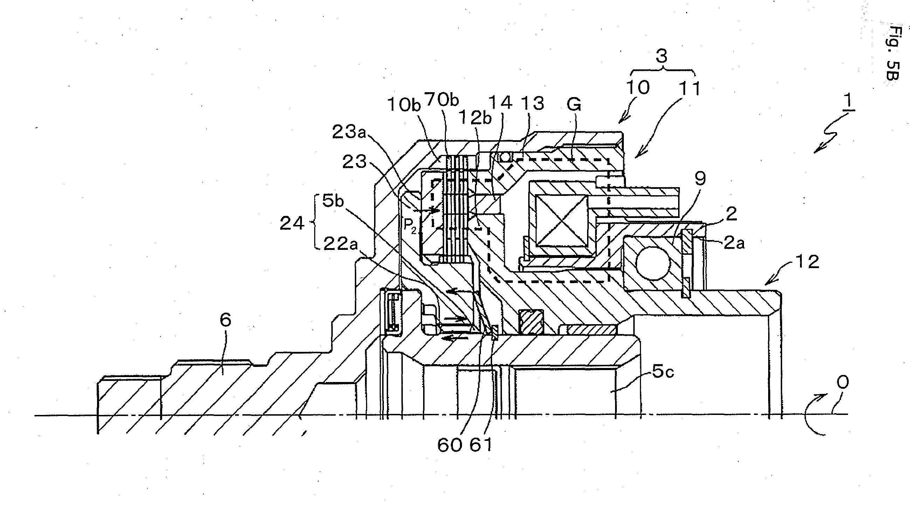

With this structure, if the current with which the electromagnetic coil 20 is energized is small during clutch torque transmission, the spring force (preload) of the diaphragm spring 60 becomes greater than the pressing force applied to the armature 21 from the intermediate member 8 (the pressing portion 23a) as indicated by the arrow P1 in FIG. 5A, and thus the thrust force amplification effect of the intermediate member 8, etc. cannot be obtained. On the other hand, when the current with which the electromagnetic coil 20 is energized is large, the pressing force applied to the armature 21 from the intermediate member 8 (the pressing portion 23a) becomes greater than the spring force of the diaphragm spring 60 as indicated by the arrow P2 in FIG. 5B, and thus the thrust force amplification effect of the intermediate member 8 etc. can be obtained. In this way, the thrust force amplification effect cannot be obtained unless the electromagnetic coil 20 is energized to such a level that the pressing force applied to the armature 21 from the intermediate member 8 (the pressing portion 23a) overcomes the spring force (preload) of the diaphragm spring 60.

As such, due to the drag torque obtained when the electromagnetic coil 20 is not energized, dissipation of the strengthening of the frictional coupling between the inner clutch plates 7a and the outer clutch plates 7b can be avoided. Further, this provides a greater freedom of setting the helix angles of the helical spline meshing portions 5b and 22a at the movement force conversion section 24.

### (Second Example Embodiment)

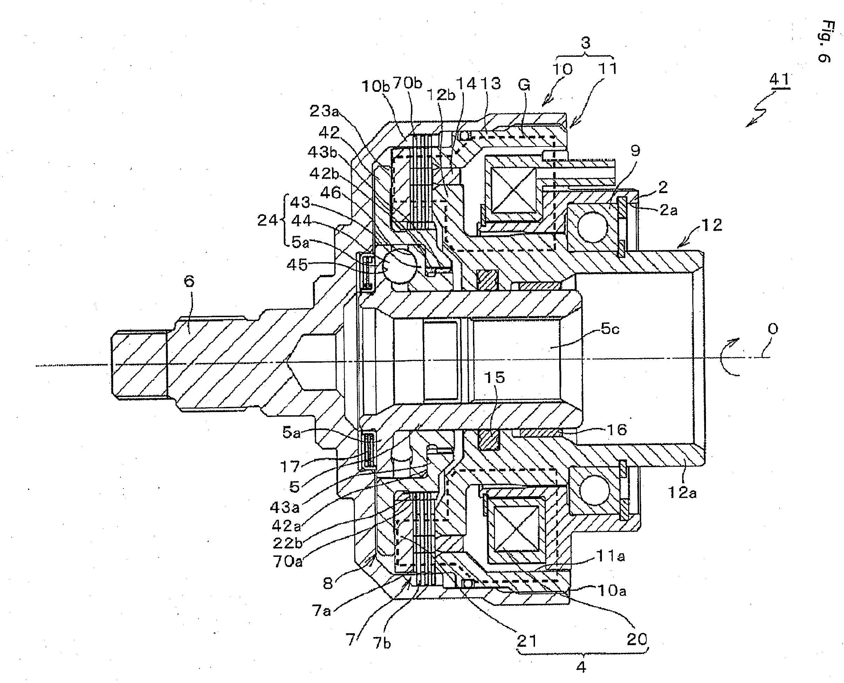

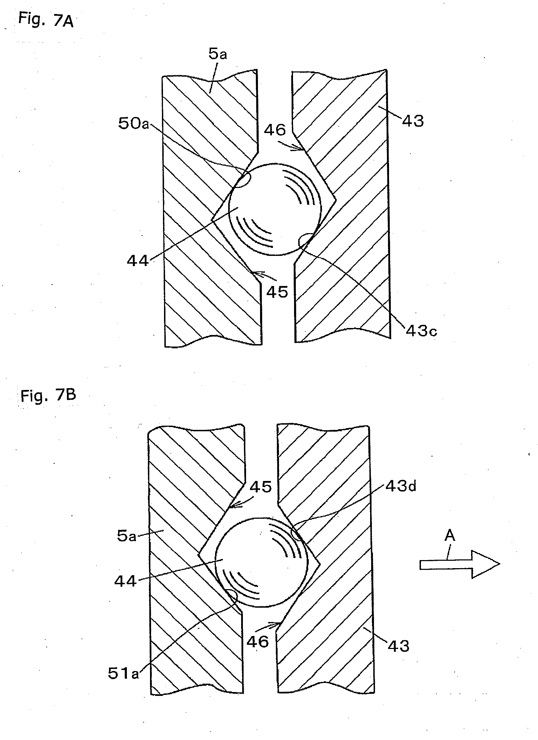

Next, an electromagnetic clutch of the second example embodiment of the invention will be described using FIGs. 6, 7A, and 7B. FIG. 6 shows a view cutting through the electromagnetic clutch in parallel to the axis of rotational members. FIGs. 7A and 7B each illustrate an operation state of a movement force conversion section. In FIGs. 6, 7A, and 7B, the members, portions, and so on, that are identical or equivalent to those in FIG. 1 will be denoted using the same reference numbers, and their detailed descriptions will be omitted.

As shown in FIG. 6, an electromagnetic clutch 41 of the second example embodiment of the invention is **characterized in that** the movement force conversion section 24 is constructed of a cam mechanism having cam followers.

More specifically, the intermediate member 8 is constructed of two elements 42 and 43 having, respectively, contact faces 42a and 43a that axially contact each other and straight spline meshing portions 42b and 43b that mesh, via splines, with each other. The pressing portion 23a is provided at the element 42, while the movement force conversion section 24 is provided at a portion, opposed to the rotational member 5, of the element 43.

The cam mechanism that constitutes the movement force conversion section 24 has the element 43 serving as a first cam, the flange portion 5a that rotates together with the rotational member 5 and serves as a second cam, and cam followers 44 that are provided between the element 43 and the flange portion 5a.

Multiple annular cam grooves 45 opening toward the cam follower side are provided at the flange portion 5a. Multiple cam grooves 46 corresponding to the respective cam grooves 45 are provided at the element 43. The cam followers 44 are interposed between the cam grooves 45 and 46 and are each formed, in its entirety, from a spherical part. The cam grooves 45 and 46 are each formed as a recess of which the depth, as measured axially, varies circumferentially, and the cam followers 44 can roll on them circumferentially. More specifically, the cam grooves 45 and 46 are each formed as a recess of which the depth, as measured axially, gradually decreases in the both directions of the circumferential direction from where the depth is largest. The bottom faces of the cam grooves 45 and 46 have, respectively, a first cam face 50a and a first cam face 43c on which the cam follower 44 rides, as shown in FIG. 7A, when the rotational member 6 rotates relative to the rotational member 5 in the direction indicated by the arrow in FIG. 6, and a second cam face 51a and a second cam face 43d on which the cam follower 44 rides, as shown in FIG. 7B, when the rotational member 6 rotates relative to the rotational member 5 in the opposite direction. The cam grooves 45 and 46 are arranged such that their portions having the largest axial depths face each other in a neutral state where the electromagnetic coil 20 is not energized. FIG. 6 illustrates the neutral state.

In the electromagnetic clutch 41 structured as described above, when the electromagnetic coil 20 of the drive mechanism 4 is energized, as in the first example embodiment, the primary clutch force occurs between the inner clutch plates 7a and the outer clutch plates 7b when they are frictionally coupled to each other, causing the rotational members 5 and 6 to be connected to each other via the inner clutch plates 7a and the outer clutch plates 7b such that torque is transmittable therebetween.

At this time, if the rotational member 6 rotates under the drive torque of the drive source in the direction indicated by the arrow in FIG. 6, the rotational force of the rotational member 6 is transmitted to the rotational member 5 via the clutch mechanism 7 and the intermediate member 8, and the rotational member 5 receives the primary generation torque from the intermediate member 8 and thereby rotates in the direction in which the rotational member 6 is rotating. At this time, the element 43 rotates relative to the flange portion 5a (the rotational member 5) in the direction indicated by the arrow in FIG. 6, so that each cam follower 44 rides on the first cam face 50a of the cam groove 45 and the first cam face 43c of the cam groove 46, producing pressing force of a level proportional to the level of the primary generation torque.

This pressing force is applied to the element 42, and thus the element 42 moves toward the clutch mechanism 7 side, whereby the pressing portion 23a presses the armature 21 in such a direction that the inner clutch plates 7a and the outer clutch plates 7b are frictionally coupled to each other. That is, as the armature 21 is thus pressed, the secondary clutch force occurs between the inner clutch plates 7a and the outer clutch plates 7b. Thus, the rotational force of the rotational member 6 is transmitted to the rotational member 5 via the clutch mechanism 7 and the intermediate member 8, so that the rotational member 5 receives the secondary generation torque from the intermediate member 8. Receiving the torque amplified through repetition of such a cycle, the rotational member 5 continues to rotate.

### (Effects of Second Example Embodiment)

The second example embodiment described above provides the following effects in addition to those described in conjunction with the first example embodiment.

The rotational member 5 can receive the amplified torque from the intermediate member 8 and continue to rotate regardless of whether the rotational member 6 rotates in the normal or reverse direction.

Electromagnetic clutches according to the invention have been described with reference to the example embodiments. It should be understood that the invention is not limited to any of the example embodiments and that the invention may be implemented in various forms within its scope. For example, the following modification may be made.

While the intermediate member 8 is arranged between the inner rotational member 5 among the two rotational members 5 and 6 provided on the inner and outer sides, respectively, and the clutch mechanism 7 in the foregoing example embodiments, the invention is not limited to this. The intermediate member 8 may be arranged between the outer rotational member 6 and the clutch mechanism 7.

### DESCRIPTION OF REFERENCE NUMBERS

1: ELECTROMAGNETIC CLUTCH, 2: BASE, 2a: HOUSING SPACE, 3: HOUSING, 4: DRIVE MECHANISM, 5: ROTATIONAL MEMBER, 5a: FLANGE PORTION, 50a: FIRST CAM FACES, 51a: SECOND CAM FACES, 5b: HELICAL SPLINE MESHING PORTION, 6: ROTATIONAL MEMBER, 7: CLUTCH MECHANISM, 7a: INNER CLUTCH PLATES, 70a: STRAIGHT SPLINE MESHING PORTIONS, 7b: OUTER CLUTCH PLATES, 70b: STRAIGHT SPLINE MESHING PORTIONS, 8: INTERMEDIATE MEMBER, 9: BEARING, 10: FRONT HOUSING, 10a: HOUSING SPACE, 10b: STRAIGHT SPLINE MESHING PORTION, 11: REAR HOUSING, 11a: HOUSING SPACE, 12: FIRST HOUSING ELEMENT, 12a: CYLINDRICAL PORTION, 12b: FLANGE PORTION, 13: SECOND HOUSING ELEMENT, 14: THIRD HOUSING ELEMENT, 15: SEAL MEMBER, 16, 17: BEARINGS, 20: ELECTROMAGNETIC COIL, 21: ARMATURE, 22: BASE PORTION, 22a: HELICAL SPLINE MESHING PORTION, 22b: STRAIGHT SPLINE MESHING PORTION, 23: FLANGE PORTION, 23a: PRESSING PORTION, 24: MOVEMENT FORCE CONVERSION SECTION, 41: ELECTROMAGNETIC CLUTCH, 32a1: FIRST CAM FACES, 32a2: SECOND CAM FACES, 42, 43: ELEMENTS, 42a, 43a: ENGAGEMENT FACES, 42b, 43b: STRAIGHT SPLINE MESHING PORTIONS, 43c: FIRST CAM FACES, 43d: SECOND CAM FACES, 44: CAM FOLLOWERS, 45, 46: CAM GROOVES, 60: DIAPHRAGM SPRING, 61: SNAP RING, O: AXIS

## Claims

1. An electromagnetic clutch including: a drive mechanism having an electromagnetic coil that generates electromagnetic force and an armature that moves as the electromagnetic coil is energized; and a clutch mechanism that has a first clutch plate and a second clutch plate that are frictionally coupled to each other as the armature is moved by driving of the drive mechanism, and that connects two rotational members, provided at an inner side and an outer side, respectively, and rotatable about an axis of the first and second clutch plates, to each other in a disconnectable manner, wherein:
the first clutch plate is connected to one of the rotational members via an intermediate member such that rotation is transmittable between the first clutch plate and the one of the rotational members via the intermediate member;
the second clutch plate is connected to the other of the rotational members such that rotation is transmittable between the second clutch plate and the other of the rotational members, and a movement force conversion section is provided at a connection portion at which the intermediate member and the one of the rotational members are connected to each other, the movement force conversion section converting part of rotational force transmitted through the connection portion into movement force for moving the intermediate member toward the clutch mechanism; and
the intermediate member has a pressing portion that presses the armature in a direction to strengthen frictional coupling between the first clutch plate and the second clutch plate as the intermediate member moves toward the clutch mechanism under the movement force obtained through conversion by the movement force conversion section.

2. The electromagnetic clutch according to claim 1, wherein the movement force conversion section is constructed of a first helical spline that is formed at the intermediate member and a second helical spline that is formed at the one of the rotational members and meshes with the first helical spline.

3. The electromagnetic clutch according to claim 2, wherein helix angles of the first and second helical splines are each set to such an angle that dissipation of strengthening of the frictional coupling between the first clutch plate and the second clutch plate, which is accomplished by the intermediate member moving toward the clutch mechanism, does not occur in a state where the electromagnetic coil is not energized.

4. The electromagnetic clutch according to claim 1, wherein:
the movement force conversion section has a first cam provided at the intermediate member and a second cam provided at the one of the rotational members;
the first cam has a first cam face and a second cam face, and the second cam has a first cam face and a second cam face;
the first cam face of the first cam and the first cam face of the second cam contact each other as the two rotational members, provided at the inner and outer sides, respectively, rotate relative to each other in a direction;
the second cam face of the first cam and the second cam face of the second cam contact each other as the two rotational members rotate relative to each other in a direction opposite to the said direction; and
the first cam faces and the second cam faces are inclined with respect to a direction of the axis such that the part of the rotational force is converted into the movement force regardless of in which of the two directions the two rotational members rotate relative to each other.

5. The electromagnetic clutch according to claim 4, wherein inclination angles of the first and second cam faces are each set to such an angle that dissipation of strengthening of the frictional coupling between the first clutch plate and the second clutch plate, which is accomplished by the intermediate member moving toward the clutch mechanism, does not occur in a state where the electromagnetic coil is not energized.

6. The electromagnetic clutch according to claim 1, wherein:
the movement force conversion section has a first cam provided at the intermediate member, a second cam provided at the one of the rotational members, and a cam follower arranged between the first cam and the second cam;
the first cam has a first cam face and a second cam face, and the second cam has a first cam face and a second cam face;
the cam follower contacts the first cam face of the first cam and the first cam face of the second cam when the two rotational members, provided at the inner and outer sides, respectively, rotate relative to each other in a direction, and the cam follower contacts the second cam face of the first cam and the second cam face of the second cam when the two rotational members rotate relative to each other in a direction opposite to the said direction; and
the first cam faces and the second cam faces are inclined with respect to a direction of the axis such that the part of the rotational force is converted into the movement force regardless of in which of the two directions the two rotational members rotate relative to each other.

7. The electromagnetic clutch according to claim 1, further including preload means for applying preload to the intermediate member such that the intermediate member moves in a direction opposite to a direction toward the clutch mechanism.
